# EUROPEAN PATENT APPLICATION

(11) **EP 4 440 182 A1**
(43) Date of publication of application: **02.10.2024**
(21) Application number: 23165469.0
(22) Date of filing: 30.03.2023
(51) Int. Cl.: H04W 24/04, H04W 24/08, H04W 24/02

(54) **AUTOMATIC REPLACEMENT OF A MALFUNCTIONING BASE STATION BY A 5G AUTONOMOUS MOBILE BASE STATION**

(71) Applicant: Siemens Sanayi ve Ticaret A. S., 34870 Istanbul (TR)
(72) Inventor: Karaaslan, Serdar, 41462 Neuss (DE); Tastan, Mustafa Cihan, 34854 Istanbul (TR)
(74) Representative: Siemens Patent Attorneys

(57) **Abstract**

Cellular network problems require fast and human resource - intense interventions due to the fact that problematic cells of the network and the corresponding malfunctioning base stations have to be identified und brought back to regular operation. Currently this is performed manually by mobile base stations that have to be manually configured and transported to the location where their service is required. The present invention provides a contribution to automatize this process in parts or totally. The computer-implemented method for maintenance of a Cellular Network (CN) comprises the steps of
- gathering the Primary Network Statistics (NS1) and generating a dataset of Secondary Network Statistics (NS2), by a 5G Autonomous Mobile Base Station (5GB),
- handing over the Secondary Network Statistics (NS2) to a Selecting Instance (SI),
- selecting the at least one Problematic Cell (PC) by analyzing the Secondary Network Statistics by the Selecting instance (SI),
- sending an Approval Request (AR) to an Approving Instance (API),
- sending at least one Movement Instruction and Base Station Information (MBI) to the at least one 5G Autonomous Mobile Base Station (5GB) and
- performing at least one Movement Execution (ME) that causes a relocation of the at least one 5G Autonomous Mobile Base Station (5GB) by itself to the at least one Problematic Cell (PC).

## Description

### FIELD OF THE INVENTION

The present invention relates to a computer-implemented method for maintenance of a Cellular Network comprising a First Base Station supporting a First Cell, at least one Further Base Station supporting at least one Further Cell and at least one Malfunctioning Base Station supporting at least one Problematic Cell by discovery of this at least one Problematic Cell by means of Primary Network Statistics comprising network coverage, capacity, availability, accessibility, retainability and mobility and replacing or supporting the at least one Malfunctioning Base Station by at least one Mobile Base Station.

The present invention further relates to a respective computer program product and a respective computer-implemented device.

### STATE OF THE ART

The invention represents on the one hand a contribution to make cellular networks more reliable and to minimize the influence of human-related errors in network problem handling. On the other hand, it can provide a valuable contribution to ensure network stability to peak network traffic situations.

In such situations, for example in the neighbourhood of big meetings, concerts or other events where a big amount of end-users in a small region requests access to the network, the cellular network can meet its limits in terms of capacity, coverage or availability.

The state of the art is that these network parameters are monitored by a mobile network operator (MNO), who is responsible to handle the previously described problems. This is done by mobile base stations. They are capable of supporting or substituting base stations that operate close to their capacity limits, or, due to their flexibility in configuration parameters comprising neighbour cell relations, azimuth, longitude or latitude, are capable of supporting or substituting base stations with limited availability. In that way, network coverage can be brought back to a sufficient limit.

A limiting factor is that these mobile base stations have to be manually configured and transported by employees, who represent a strongly limited resource the MNO has access to.

### SUMMARY OF THE INVENTION

One object of the present invention regards the fact that in the case a Cellular Network comprising a First Base Station supporting a First Cell, at least one Further Base Station supporting at least one Further Cell and at least one Malfunctioning Base Station supporting at least one Problematic Cell has coverage, capacity or availability problems due to an insufficient number of base stations or other technical network problems that can occur during the operation of this Cellular Network, the at least one Problematic Cell has to be discovered and supported or replaced by at least one Mobile Base Station. That problematic cell discovery and recovery or replacement is connected to more or less high workload for the employees of a mobile network operator (MNO) and the MNO himself. The object of the invention is to significantly reduce or completely overtake this workload.

This object is achieved by a computer-implemented method that comprises the steps of gathering the Primary Network Statistics and generating a dataset of Secondary Network Statistics, by a 5G Autonomous Mobile Base Station, handing over the Secondary Network Statistics to a Selecting Instance, selecting the at least one Problematic Cell by analyzing the Secondary Network Statistics by the Selecting instance, sending an Approval Request to an Approving Instance, in case the Approval Request is approved sending at least one Movement Instruction and Base Station Information to the at least one 5G Autonomous Mobile Base Station and performing at least one Movement Execution of the at least one 5G Autonomous Mobile Base Station that causes a relocation of the at least one 5G Autonomous Mobile Base Station by itself to the at least one Problematic Cell with the Malfunctioning Base Station.

In this application, a cellular network can be any available mobile communication standard like LTE or a 5G network. The term Base Station in the field of the present invention means any physical device that supports the cellular network. Typically a Base Station is a telecommunication sender unit that enables wireless exchange of digital and analogue data of any content.

The term Cell means a telecommunication cell. In other words, this is a spatial area in that the signal strength of the Base Station is sufficiently high to enable the wireless data exchange with acceptable speed. The limit of speed that is recognized as acceptable is defined by technical or legal requirements. The Cell and the corresponding Base Station are directly connected to each other in the sense of a bijective function.

A Mobile Base Station is autonomous in the sense of the present invention if it is capable of finding its way to the point of operation that is defined by the MNO. In particular, this is realized by a 5G Autonomous Mobile Base Station (5GAMB). This is a device that on the one hand comprises at least one mobile base station and on the other hand comprises a mechanic driving mechanism, so that the device is capable of autonomously relocating itself to any point of operation.

A cell is coined as Problematic if it does not meet or does not meet anymore the minimal requirements in terms of signal strength that were discussed before. If a cell is problematic, this has the direct consequence that the corresponding Base Station has to be considered as Malfunctioning. This is because of the bijective nature of the relation between Cell and corresponding Base Station.

So the object of the invention is achieved by this at least one 5G Autonomous Mobile Base Station (5GAMB) that comprises at least one Mobile Base Station and is capable of moving on its own. With this, it is possible to prevent a situation where the MNO has to find an employee who drives the at least one Mobile Base Station to the at least one Problematic Cell to support or replace the at least one Malfunctioning Base Station. The at least one 5GAMB gathers Primary Network Statistics, e.g. comprising network coverage, capacity or availability, and provides a dataset, called Secondary Network Statistics, to a Selecting Instance that has to identify the at least one Problematic Cell. The difference between Primary and Secondary Network Statistics is only of data type nature - the comprised information is the same. This means that Primary and Secondary Network Statistics optionally also can be identic. In a basic embodiment of the invention, this Selecting Instance is the MNO. In this case, the MNO also acts as Approving Instance: He has to decide if at least one Movement Instruction and Base Station Information has to be sent to the at least one 5GAMB that further executes that Instruction by at least one Movement Execution and relocates to the at least one Problematic Cell to support the at least one Malfunctioning Base Station.

According to one embodiment of the invention, the Approving Instance sends, in parallel to the at least one Movement Instruction and Base Station Information that is sent to the at least one 5G Autonomous Mobile Base Station, at least one Shut-Down Instruction to the at least one Malfunctioning Base Station.

This embodiment of the invention contributes to an even better achievement of the previously mentioned object because the at least one Malfunctioning Base Station is completely substituted with the at least one Mobile Base Station of the at least one 5GAMB. In this way, any hidden network problems arising from the at least one Malfunctioning Base Station can be avoided in advance.

In a preferable embodiment of the invention, the Selecting Instance is comprised by an Artificial Intelligence Engine.

This embodiment of the invention contributes to an even better achievement of the previously mentioned object because the Artificial Intelligence Engine reduces the workload for the MNO to the tasks to be fulfilled by the Approving Instance. The Artificial Intelligence Engine comprising the Selecting Instance can hereby be the same Artificial Intelligence Engine as the one comprising the Approving Instance and/or the same Artificial Intelligence Engine as the one configuring the at least one 5GAMB. The Selecting Instance that is controlled by the Artificial Intelligence Engine in this embodiment of the invention, prepares at least one Movement Instruction and Base Station Information and optionally the at least one Shut-Down Instruction and sends an Approval Request to the Approving Instance, which is represented by the MNO in this embodiment of the invention - the MNO has just to decide if he approves or denies the Approval Request.

In a preferable embodiment of the invention, the Selecting Instance or the Approving Instance or both of them are comprised by an Artificial Intelligence Engine.

In this embodiment of the invention the MNO is completely substituted by the Artificial Intelligence Engine. This leads to an autonomous system, where no human interaction is required anymore and that additionally benefits from the absence of human-related errors compared to the previously described embodiments of the invention.

According to one embodiment of the invention, the Base Station Information comprised by the at least one Movement Instruction and Base Station Information is used for configuring the at least one 5G Autonomous Mobile Base Station.

This embodiment of the invention employs the Base Station Information from the Malfunctioning Base Station, that is sent to the 5GMB as a part of the at least one Movement Instruction and Base Station Information, to configure the at least one 5G Autonomous Mobile Base Station in the same way as the Malfunctioning Base Station is configured. This leads to an improved and simplified embedding of the 5G Autonomous Mobile Base Station in the network environment of the at least one Malfunctioning Base Station compared to the previously described embodiments of the invention.

In a preferable embodiment of the invention, the at least one 5G Autonomous Mobile Base Station is configured by an Artificial Intelligence Engine.

The Artificial Intelligence Engine is capable of optimizing physical parameters of the 5G Autonomous Mobile Base Station that have significant influence on the contribution to network coverage, capacity and availability of the at least one 5G Autonomous Mobile Base Station, such as azimuth, latitude, longitude or neighbour cell relations by machine learning algorithms. In this way, the present embodiment of the invention reaches an even better achievement of the previously mentioned object.

The invention also relates to a computer program product that implements the previously described methods in a system comprising the Cellular Network, the First Base Station supporting the First Cell, the at least one Further Base Station supporting the at least one Further Cell and the at least one Malfunctioning Base Station supporting the at least one Problematic Cell, the at least one 5GAMB, the Selecting Instance and the Approving Instance.

The invention also relates to a further computer program product for a system additionally comprising the Artificial Intelligence Engine comprising the Selecting Instance. With that, the task of selecting the at least one problematic cell can be handed over to the Artificial Intelligence Engine.

The invention also relates to a further computer program product for a system that further comprises the Artificial Intelligence Engine additionally comprising the Approving Instance. With that, also the task of approving the replacement of the at least one Malfunctioning Base Station supporting the at least one Problematic Cell by a 5GAMB can be handed over to the Artificial Intelligence Engine.

The invention also relates to a computer-implemented device that is employed to execute any of the methods described within the previously discussed embodiments of the invention. This device implements the previously described methods in hardware, what makes the method independent from any support hardware and therefor allows to execute the methods claimed in one of the method claims in a closed environment. The computer-implemented device comprises the Cellular Network, the First Base Station supporting the First Cell, the at least one Further Base Station supporting the at least one Further Cell, the at least one Malfunctioning Base Station supporting the at least one Problematic Cell, the at least one 5G Autonomous Mobile Base Station, the Selecting Instance and the Approving Instance.

According to one embodiment of the invention, the computer-implemented device described in the last paragraph comprises the Artificial Intelligence Engine that itself comprises the Selecting Instance.

This embodiment of the invention allows the implementation of method claim 3 in a device. It allows to hand over the Selection Instance task of the MNO to the Artificial Intelligence Engine, what reduces the workload of the MNO.

According to one embodiment of the invention, the computer-implemented device described three paragraphs ahead comprises the Artificial Intelligence Engine that itself comprises the Approving Instance.

This embodiment of the invention allows the implementation of method claim 4 in a device. It allows to hand over the Selection Instance task, the Approving Instance Task or both of them from the MNO to the Artificial Intelligence Engine, and allows to substitute the MNO by the Artificial Intelligence Engine.

### BRIEF DESCRIPTION OF FIGURES

The invention will be explained in closer detail by reference to a preferred embodiment, which is depicted schematically in the figures.

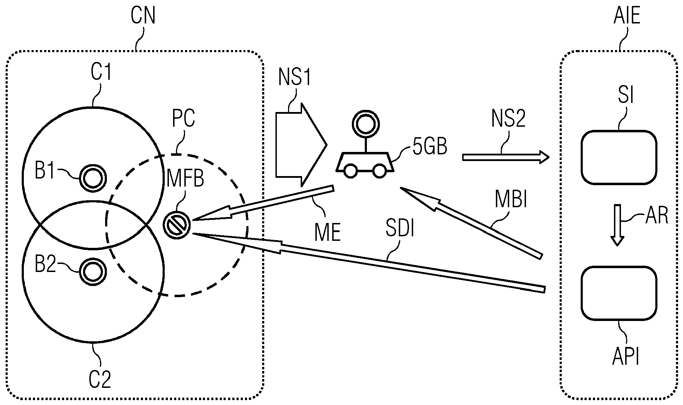

- Fig. 1: shows the principle of operation of the invention in the form of a signal flow chart between the components of the computer-implemented method.

### WAYS TO IMPLEMENT THE INVENTION

Fig. 1 shows the principal sketch of the computer system realizing a method for maintenance of a Cellular Network CN. The Cellular Network CN comprises a First Base Station B1 that supports a First Cell C1, at least one Further Base Station B2 supporting at least one Further Cell C2 and at least one Malfunctioning Base Station MFB supporting at least one Problematic Cell PC.

To maintain the Cellular Network CN, this at least one Problematic Cell PC has first to be discovered. In a first step a measurement of Primary Network Statistics NS1 comprising network coverage, capacity, availability, accessibility, retainability and mobility is performed. In the present invention, those measurements are done by a 5G Autonomous Mobile Base Station 5GB that generates a dataset of Secondary Network Statistics NS2.

In a next step, this dataset is handed over to a Selecting Instance SI that identifies the at least one Problematic Cell PC by analyzing the Secondary Network Statistics NS2 in terms of network coverage, capacity, availability, accessibility, retainability and mobility.

After having identified the at least one Problematic Cell PC, an Approval Request AR is sent to an Approving Instance API. Both, the Selecting Instance SI and the Approving Instance API, can be comprised by an Artificial Intelligence Engine AIE that fully automatizes this part of maintenance of the Cellular Network CN.

In a next step at least one Movement Instruction and Base Station Information MBI is sent to the at least one 5G Autonomous Mobile Base Station 5GB. In parallel to that at least one Shut-Down Instruction SDI is sent to the at least one Malfunctioning Base Station MFB. After that, the at least one 5G Autonomous Mobile Base Station 5GB performs at least one Movement Execution ME that causes a relocation of the at least one 5G Autonomous Mobile Base Station 5GB to the at least one Problematic Cell PC with the Malfunctioning Base Station MFB.

Finally, the at least one Malfunctioning Base Station MFB is replaced by at least one Autonomous Mobile Base Station 5GB, that either overtakes the configuration of the at least one Malfunctioning Base Station MFB or is configured by the Artificial Intelligence Engine AIE.

Alternatively, the Autonomous Mobile Base Station 5GB does not replace the Malfunctioning Base Station MFB but only works in addition to the Malfunctioning Base Station MFB to provide sufficient service for the Problematic Cell PC.

Independent of the grammatical term usage, individuals with male, female or other gender identities are included within the term.

### LIST OF REFERENCE SIGNS

- 5GB: 5G Autonomous Mobile Base Station (5GAMB)
- AIE: Artificial Intelligence Engine
- API: Approving Instance
- AR: Approval Request
- B1: First Base Station
- B2: Further Base Station
- C1: First Cell
- C2: Further Cell
- CN: Cellular Network
- MB: Mobile Base Station
- MBI: Movement Instruction and Base Station Information
- ME: Movement Execution
- MFB: Malfunctioning Base Station
- NS1: Primary Network Statistics
- NS2: Secondary Network Statistics
- PC: Problematic Cell
- SDI: Shut-Down Instruction
- SI: Selecting Instance

## Claims

1. Computer-implemented method for maintenance of a Cellular Network (CN) comprising a First Base Station (B1) supporting a First Cell (C1), at least one Further Base Station (B2) supporting at least one Further Cell (C2) and at least one Malfunctioning Base Station (MFB) supporting at least one Problematic Cell (PC) by discovery of this at least one Problematic Cell (PC) by means of Primary Network Statistics (NS1) comprising network coverage, capacity, availability, accessibility, retainability and mobility and replacing or supporting the at least one Malfunctioning Base Station (MFB) by at least one Mobile Base Station, **characterized in that** the computer-implemented method comprises the steps of
- gathering the Primary Network Statistics (NS1) and generating a dataset of Secondary Network Statistics (NS2), by a 5G Autonomous Mobile Base Station (5GB),
- handing over the Secondary Network Statistics (NS2) to a Selecting Instance (SI),
- selecting the at least one Problematic Cell (PC) by analyzing the Secondary Network Statistics (NS2) by the Selecting instance (SI),
- sending an Approval Request (AR) to an Approving Instance (API),
- in case the Approval Request (AR) is approved sending at least one Movement Instruction and Base Station Information (MBI) to the at least one 5G Autonomous Mobile Base Station (5GB) and
- performing at least one Movement Execution (ME) of the at least one 5G Autonomous Mobile Base Station (5GB) that causes a relocation of the at least one 5G Autonomous Mobile Base Station (5GB) by itself to the at least one Problematic Cell (PC) with the Malfunctioning Base Station (MFB).

2. Method according to claim 1, **characterized in that** in parallel to the at least one Movement Instruction and Base Station Information (MBI) that is sent to the at least one 5G Autonomous Mobile Base Station (5GB), at least one Shut-Down Instruction (SDI) is sent to the at least one Malfunctioning Base Station (MFB).

3. Method according to claim 1 or 2, **characterized in that** the Selecting Instance (SI) is comprised by an Artificial Intelligence Engine (AIE).

4. Method according to any of the preceding claims, **characterized in that** the Approving Instance (API) is comprised by an Artificial Intelligence Engine (AIE).

5. Method according to any of the preceding claims, **characterized in that** the Base Station Information comprised by the at least one Movement Instruction and Base Station Information (MBI) is used for configuring the at least one 5G Autonomous Mobile Base Station (5GB).

6. Method according to claims 3 and 4, **characterized in that** the at least one 5G Autonomous Mobile Base Station (5GB) is configured by an Artificial Intelligence Engine (AIE).

7. Computer program product **comprising** instructions to cause a system comprising the Cellular Network (CN), the First Base Station (B1) supporting the First Cell (C1), the at least one Further Base Station (B2) supporting the at least one Further Cell (C2) and the at least one Malfunctioning Base Station (MFB) supporting the at least one Problematic Cell (PC), the at least one 5G Autonomous Mobile Base Station (5GB), the Selecting Instance (SI), the Approving Instance (API), to perform all the steps of claims 1, 2, 5 or 6.

8. Computer program product according to claim 7, the system further **comprising** the Artificial Intelligence Engine (AIE) comprising the Selecting Instance (SI) to perform all the steps of claim 3.

9. Computer program product according to claim 7 or 8, the system further **comprising** the Artificial Intelligence Engine (AIE) additionally comprising the Approving Instance (API), to perform all the steps of claim 4.

10. A computer-implemented device **comprising** the the Cellular Network (CN), the First Base Station (B1) supporting the First Cell (C1), the at least one Further Base Station (B2) supporting the at least one Further Cell (C2), the at least one Malfunctioning Base Station (MFB) supporting the at least one Problematic Cell (PC), the at least one 5G Autonomous Mobile Base Station (5GB), the Selecting Instance (SI) and the Approving Instance (API), which device is adapted to execute a method according to one of claims 1,2,5,6.

11. A computer-implemented device according to claim 10, **characterized in that** the device additionally comprises the Artificial Intelligence Engine (AIE) that itself comprises the Selecting Instance (SI) which device is adapted to execute a method according to claim 3.

12. A computer-implemented device according to claim 10 or 11, **characterized in that** the device comprises the Artificial Intelligence Engine (AIE) that itself additionally comprises the Approving Instance (API) which device is adapted to execute a method according to claim 4.
